# EUROPEAN PATENT APPLICATION

(11) **EP 2 835 356 A1**
(43) Date of publication of application: **11.02.2015**
(21) Application number: 13179807.6
(22) Date of filing: 08.08.2013
(51) Int. Cl.: C02F 1/463, C02F 1/465, C02F 1/52, C02F 9/00, C02F 1/66

(54) **A method of comprehensive electrochemical treatment of industrial waste waters and an installation for that treatment**

(71) Applicant: Obshtshestvo s orgranichennoy otvetstvennostyu "Mezhregionalnaya inzhenernaya ekotechnologicheskaya kompaniya", Novosibirsk 630091 (RU)
(72) Inventor: Gospodinov, Dmitry Grigoryevich, 630091 Novosibirsk (RU); Shkarin, Anatoliy Vasilyevich, 630090 Novosibirsk (RU)
(74) Representative: Spengler, Robert

(57) **Abstract**

A method of comprehensive electrochemical treatment of industrial waste water and an installation for implementing this method are related to the area of treatment of waste waters. A continuous technological process, wider range of applications, the capability to remove suspended materials and petroleum products, to reduce ions of heavy metals and sulphate-ions to their permissible levels, even when the waste water is of a highly concentrated kind, to reduce lime and amorphous aluminium hydroxide consumption industrial, also as far as the installation is concerned, reliability and the continuous technological process -were achieved by carrying out electroflotation prior to electrolysis in the electroflotocoagulator, then continuing to treat the waste water until its pH reaches at least 12 - by introducing a neutraliser in the form of lime, while continuing uninterrupted stirring, then introducing a flocculant into the water. The installation designed for implementation of this method includes an averager, an electroflotator with insoluble electrodes, an electroflotocoagulator with soluble aluminium electrodes, a device for removing froth, a neutraliser's dispenser, and a sedimentation tank. The electroflotocoagulator is connected in series after the electroflotator. It is linked to the reactor/mixer equipped by a neutraliser dispenser, while the reactor/mixer is connected -via pipes - with the sedimentation tank, which is connected with the unit for preparation and dispensing the flocculant solution. When concentrates are treated, amorphous aluminium hydroxide, a product of thermal decomposition of natural gibbsite, which has an amorphous structure, is introduced into the reactor/mixer from a special dispenser at the same time as lime is introduced.

## Description

This invention relates to treatment of industrial waste waters. It can be used in industry for a combined treatment of waste waters: an electrochemical method for the removal of suspended particles, petroleum products, heavy metal ions and sulphate-ions.

From the technical point of view, there exists a treatment of water flows contaminated with suspended particles, petroleum products, surface-active substances, iron and chromium ions. That method includes averaging the flow, mechanical treatment, electrocoagulation, electroflotation and pressure flotation, transporting the froth with sludge, skimmed at all the stages of the treatment, to the flow averaging stage [Russian patent for invention No. 2087423]. Electroflotation is carried out after pressure flotation, 5-10% of the flow. The flow after electroflotation is saturated with air and returned to electrocoagulation and pressure flotation: 30-40% of the returned water is directed to electrocoagulation, while 60-70% to pressure flotation; also 90-95% of the flow is directed to additional adsorption treatment with activated carbon, then regenerated at voltage of 0.7-1.5 V. The regenerated flow is then directed to flow averaging.

This method has the following drawbacks: the treatment is complicated and hard to use as a continuous process for large volumes of waste water, and it does not remove sulphates.

There is another method of waste water treatment for suspended substances, petroleum products, surface-active substances, and iron and chromium ions. This is an electrochemical method. Waste water of galvanic industries, containing divalent iron is charged into an anodic chamber of a membrane electrolyser. The iron is oxidised in the acid environment into its trivalent form. Then gaseous chlorine and oxygen are removed by vacuum degassing. Then water is directed to the inlet of the cathodic chamber of a membrane electrolyser, mixed with the waste waters of galvanising plants, containing ions of 6-valent chromium and treat that mixture in the cathodic chamber, where chromium ions are reduced in the alkaline environment to their trivalent form. Then this water is mixed with the waste waters of the entire industrial plant, which contain suspended materials, petroleum products and surface-active substances and direct this mixture to an electroflotator, equipped with electrode blocks individually distributed in the flotator and forming alternating flotation and sedimentation zones along the flow of the treated water. The number of electrode blocks equals the number of standstill zones, formed by the partition wall of the electroflotator, while the distance between the electrode blocks equals their width (Russian patent for invention No. 2340562].

The drawback of this method is its narrow area application as it is designed for industries that include galvanising units.

In existing technological designs, improving treatment results of industrial waste waters is achieved by improving individual parts of the equipment used.

There is a design for electrochemical treatment of waste waters, which includes a casing subdivided into an electrocoagulation section, equipped with a set of soluble electrodes and a sump, a short pipe, an inlet for the waste water to be treated, located in the electrocoagulation sector above the soluble electrodes, and another short pipe, the outlet for the purified water, located in the electroflotation section (Soviet Union Patent No. 1055728]. This design is equipped with an overflow section, located between the electrocoagulation and electroflotation sections, and by a device for skimming the froth from the casing and transferring it into the froth collector with a froth damper.

The drawback of this design is its big size as well as the failure to remove inorganic impurities. Also, sulphites cannot be removed from waste water in this design.

There is also a design for electrochemical treatment of waste waters that includes a casing subdivided with partition walls into an electrocoagulation chamber with soluble electrodes distributed in it, an electroflotation chamber with a set of insoluble electrodes, a short pipe for the introduction of waste waters, and a device for the removal of the treated water (Soviet Union patent No, 1411289). The partition walls are arranged at an angle, the electrocoagulation chamber contains a distribution grid located under the soluble electrodes, while the short inlet pipe is located under the distribution grid. The set of insoluble electrodes consists of three-faced prisms and grid angles, spread out individually, while the elctroflotation chamber has sloping shelves, running parallel with the partition walls, so that the lower edges of the shelves are located strictly above the tips of the insoluble electrodes, while the device for letting the treated water in is made as an overflow section, located between the partition wall and the wall of the casing. The overflow section carries some vertical inhibiting partition walls. A froth removing device is located in the upper part of the electroflotation chamber.

The draw backs of this design are: having the electrocoagulator and electroflotator in the same installation and the complicated structure of some particular parts and of the installation as a whole, the sloping partition walls in the flotation chamber, which cause rising gas bubbles collide with the partition walls and, as a result, either sticking to the partition walls or collapsing flotation aggregates, which makes electrochemical treatment of waste waters less effective. In addition, having the coagulation chamber and flotation chamber in the same installation does not provide optimum conditions for either electrocoagulation or electroflotation in a continuous process. This installation does not remove sulphates from waste waters.

The design most similar to the invented method of comprehensive electrochemical treatment of industrial waste waters and the installation to implement the treatment, both in its most important features and in technological results, is the method used for treating waste waters of wood-processing plants, designed to remove lignin and accompanying organic impurities. That method includes electrocoagulation and electroflotation (Soviet Union patent No, 710986]. Waste waters are directed into the averaging device, then they are pumped over into an intermediate tank, where their acidity level is brought to pH = 4.5-5.0, then they are directed to the electrocoagulator. Electrocoagulation is carried out, using aluminium anodes, current density 0.01-0.02 A/cm² and pH of the water treated = 4.5-5.0. The process takes 15-20 minutes. Then the waters are left for sedimentation to take place for 20-30 minutes. Electroflotation is carried out in an electroflotator, using titanium anodes with the active layer consisting of manganese dioxide and current density 0.01-0.02 A/cm², duration being 15-20 minutes. The floating precipitate is removed in a conventional way.

The drawback of this method and this installation is that they are designed for the removal of organic impurities only. They **cannot be used** for removing metals (due to the low pH during the treatment) or sulphates.

This invention aims at offering a method of continuous treatment of industrial waste waters, while carrying out the process without interruptions, being also a method that removes suspended materials, petroleum products, ions of heavy metals and sulphates, reducing their levels to required standards, while also reducing consumption of lime and amorphous aluminium hydroxide.

The above goals **were achieved** for the following reasons:
for this method: thanks to the fact that, unlike the already known method, which includes averaging the waste waters, removing large suspended materials, bringing the waters to the required pH, electrolysing the waste waters in an electroflotocoagulator with soluble aluminium electrodes, electroflotation with insoluble electrodes, removing the froth, holding for sedimentation to take place and removing the precipitate, in the present invention, electroflotation is carried out in the electroflotocoagulator before the electrolysis, then pH of the waste water is raised to at least 12 via the introduction of a stabiliser in the form of lime under continuous stirring, then introducing a flocculating agent in the water treated.

For this installation of comprehensive electrochemical treatment of industrial waste waters, the installation includes an averager, an electroflotator with insoluble electrodes, electroflotocoagulator with soluble aluminium electrodes, a device for removing the froth, a dispenser of the stabilising agent, a sedimentation tank for the treated waste waters. The electric flotocoagulator is located behind the electroflotator and is connected to the reactor/mixer, equipped with the neutralising agent distributor, while the reactor/mixer is, in its turn, connected via pipes with the sedimentation tank, connected with the unit where the flocculant solution is prepared and dispensed.

For a particular application, amorphous aluminium hydroxide is introduced into the reactor/mixer as a neutralising agent in addition to lime, or else a product of thermal dissociation of natural **gibbsite,** which has an amorphous structure, was used.

For that particular application, the installation was additionally equipped with a distributor of amorphous aluminium hydroxide, so that it could be introduced into the reactor/mixer directly.

One of the novelties of this invention is a continuous, comprehensive treatment of waste waters, first administering electroflotation, then electroflotocoagulation, then the water was treated in a reactor/mixer, where lime was introduced, where pH of the waste water increased to 12.0, i.e. it became highly alkaline, and the water was continuously stirred. Then the flocculant is introduced, and the treated water was left for sedimentation and the precipitation of the sediment. Thanks to this arranging the processes in this sequence, it became possible to set best treatment conditions in different stages for a large range of different groups of impurities. It has also become possible to diversify possibilities of this method by introducing amorphous aluminium hydroxide or a product of thermal decomposition of natural **gibbsite** into the reactor/mixer, simultaneously with lime and under continuous stirring. This helps to treat solutions of high concentration, such as concentrates formed after industrial waste waters have been treated with a reverse osmosis method, when 'active' aluminium hydroxide, produced by electrochemical dissolution of aluminium anodes in the electroflotocoagulator, is insufficient to produce a sufficient quantity of tricalcium **aluminate** (during a continuous treatment). The method of comprehensive electrochemical treatment allows treating industrial waste waters in a continuous fashion and to be able to dispense correct quantities of aluminium hydroxide for the reaction. This also helps to measure the lime accurately.

The novelty of this invention is in that this installation for electrochemical treatment of industrial waste waters, which includes such technological units as an electroflotator with insoluble electrodes, equipped with a froth removing device, and an electric flotocoagulator with soluble aluminium electrodes, is that the electroflotocoagulator is connected in a serial fashion after the electroflotator, that it is connected with the reactor/mixer, equipped with a lime dispenser, that the reactor/mixer is connected via a pipeline with the sedimentation tank for the treated waters, which is connected with a unit for the preparation and dispensation of the flocculant solution. Also the novelty is in that the installation is equipped with an additional dispenser for amorphous aluminium hydroxide, connected in such a fashion that it can supply into the reactor/mixer. This installation ensures that the process can be carried on continuously and without interruptions and treat large volumes of waste waters of complex compositions.

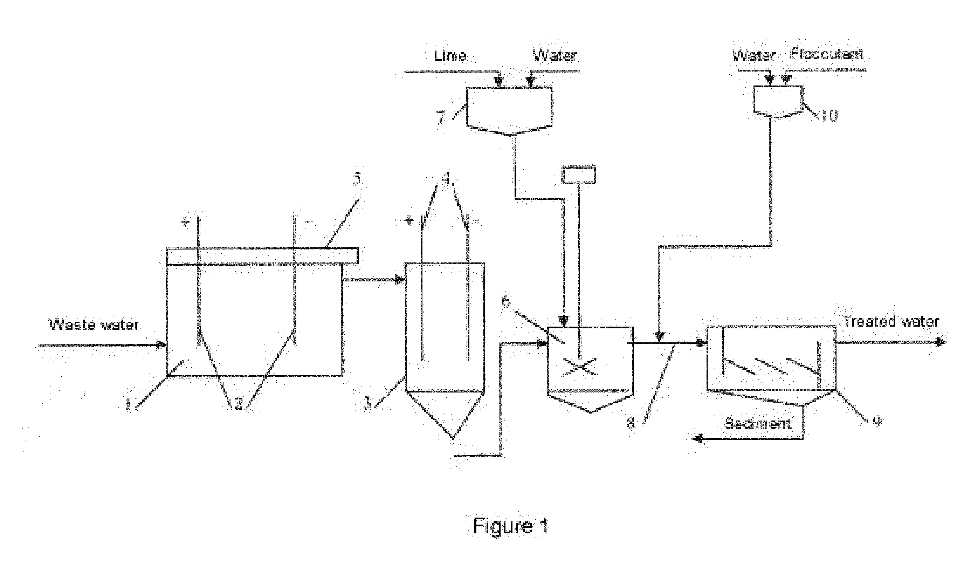

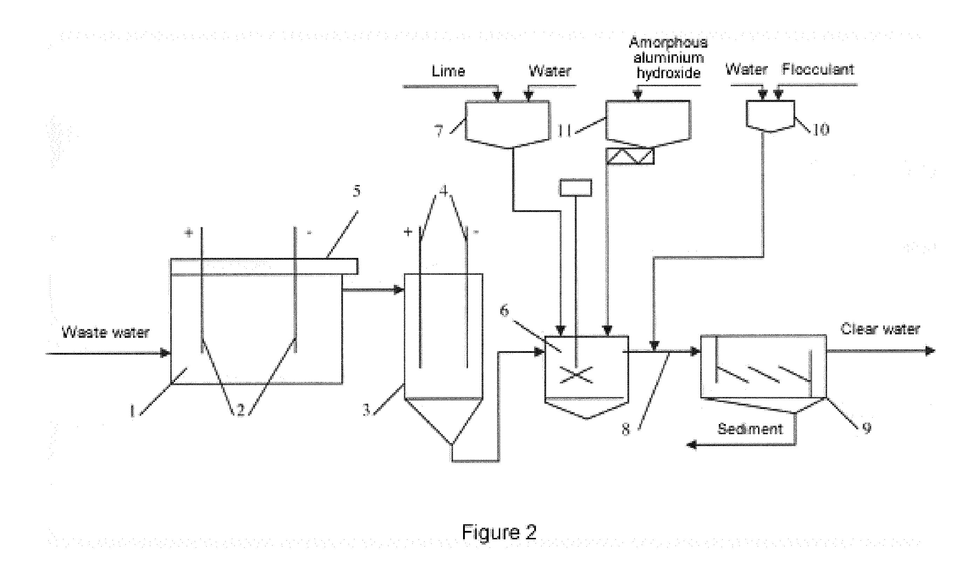

The present invention is illustrated by Figs 1 and 2 and by Tables 1, 2 and 3. Fig. 1 shows a basic diagram of the installation for the claimed method of electrochemical treatment of industrial waste waters: an electroflotator with **insoluble** electrodes, and electroflotocoagulator with soluble electrodes, a device for collecting and removing the froth, a reactor/mixer, a neutraliser dispenser, a pipeline, a sedimentation tank, and a unit for the preparation and dispensing of flocculant solution.

Fig. 2 shows a diagram of the installation for electrochemical treatment of industrial waste water: an electroflotator with **insoluble** electrodes, an electroflotocoagulator with soluble electrodes, a device for the collection and removal of froth, a reactor/mixer, a neutraliser dispenser, an amorphous aluminium hydroxide dispenser, a pipeline, and a unit for the preparation and dispensation of the flocculant solution.

Table 1 Results of treating quarry water with the comprehensive electrochemical treatment method for industrial waste waters.

Table 2. Results of treating the concentrate produced by reverse osmosis of industrial waste waters using the comprehensive electrochemical treatment method of industrial waste waters.

Table 3. Results of treating the concentrate produced by reverse osmosis of industrial waste waters using the comprehensive electrochemical treatment method of industrial waste waters, introducing amorphous aluminium hydroxide.

The installation for the method claimed includes (Fig. 1): an electroflotator 1 with insoluble electrodes 2, made of titanium for example, and an electric flotocoagulator 3 with soluble electrodes 4 of aluminium, connected in a serial fashion. Electrodes 2 and 4 are connected with power sources (not shown) Electroflotator 1 is equipped with a device for the collection and removal of froth 5, of a standard design. Electroflotocoagulator 3 is connected with reactor/mixer 6, equipped with neutraliser dispenser 7. Reactor/mixer 6 is connected via pipeline 8 and sedimentation tank 9 for the water treated. Unit 10 for preparing and dispensing the flocculant solution is connected with pipeline 8 ahead of sedimentation tank 9. For a particular case of application, the installation also includes an amorphous aluminium hydroxide dispenser 11 (Fig. 2), mounted in so that it can supply aluminium hydroxide into rector/mixer 6.

The claimed method of electrochemical treatment for industrial waste waters operates as follows.

Industrial waste waters, containing suspended materials, petroleum products, metal ions and sulphate ions, are averaged and, first of all, have large suspended particles removed. Then the water is directed to the electroflotator 1 (Fig. 1). Direct electric current of 90-120 A/m² is applied to insoluble electrodes 2. The duration of the treatment in electroflotator 1 is 5 minutes. **Gas bubbles** form on electrodes 2 during the electrolysis **(oxygen on the anode and hydrogen on the cathode).** Floating up in the fluid, they interact with impurities, stick to them because surface energy of the floated particle and of a gas bubble decreases at the 'liquid-gas' interface. Newly formed aggregates have lower density than water, which is why they float to the surface and accumulate like froth. The froth contains small suspended particles, petroleum products and heavy metals in the form of hydroxides. The froth 5 is collected and removed from the surface of water. At this (first) stage of the electrochemical treatment of industrial waste waters, the water does not suffer contamination with secondary contaminants.

When industrial waste water, that has been subjected to a preliminary treatment, leaves electroflotator 1 it is directed to electric flotocoagulator 3 with soluble aluminium electrodes 4. Direct electric current of 100-400 A/m² is applied from a source to the electrodes. The duration of this stage of treatment in electric flotocoagulator 3 is 5-10 min. When direct electric current is applied to the soluble aluminium electrodes 4, the anode electrochemical dissolution process starts, and aluminium hydroxide forms. The dissolution of 1 g of aluminium electrochemically, requires 12 W-hour. This means that one can control the quantity of aluminium hydroxide by the current on aluminium electrodes 4. This limits the amount of Al used to a minimum. Aluminium hydroxide can be used as an effective sorbent, capable of removing the remaining petroleum products and heavy metals from water.

Then the waste water, carrying aluminium hydroxide particles from electroflotocoagulator 3, is directed to reactor/mixer 6, where lime in the form of a 5% suspension is added from neutraliser dispenser 7. This process continues under stirring until the water achieves pH ≥ 12.0. This pH value is required for the formation of tri-calcium aluminate, used for removing from water sulphates in the form of calcium hydro-sulphoaluminate and to complete sedimentation of the heavy metals still remaining in the water. From reactor/mixer 6 waste water flows via pipeline 8 to sedimentation tank 9. Before the point where the pipe 8 enters the tank 9, flocculant 10 is dispersed into the pipe from the unit where preparation and dispensation of the flocculant solution takes place. This ensures that the water receives additional vigurous mixing of the flocculant with the treated water. The water mixed with the flocculant, undergoes the sedimentation process in the sedimentation tank 9. This facilitates that process is carried on continuously, without interruption and that the treatment is highly effective. Neither in this (second) stage, does the treated water become contaminated with secondary contaminants. The flocculant makes insoluble particles formed during the comprehensive treatment larger, thus accelerating their sedimentation. Sedimentation and precipitation in sedimentation tank 9 take 20-30 minutes. The sediment contains sulphate ions in the form of calcium hydro-sulphoaluminate as well as heavy metals in the form of hydroxides. The sediment is removed from the tank 9 with an ordinary commercial device The water, leaving the sedimentation tank, is fit to be reversed and used for technical purposes.

However, in treatment of highly concentrated solutions, concentrates formed in the process of treatment of industrial waste waters by reverse osmosis for example, the 'active' aluminium hydroxide produced by electrochemical dissolution of the anode in the electroflotocoagulator, is insufficient for the production of the quantity of tricalcium aluminate required (for a continuous treatment). For this reason, a required quantity of powdered amorphous aluminium hydroxide 11 is introduced into **reactor/mixer** 6.

The proposed method of comprehensive electrochemical treatment works as a continuous treatment of industrial waste waters, allowing accurate measuring of aluminium hydroxide, used in the reactions, which ensures that lime is also accurately measured. Thus, the proposed method permits the use of correct quantity of both reagents, depending on the quality of the water treated (technological water, or household or water dumped into the fisheries reservoirs) and avoids using an excess quantities

### Example 1

Averaged quarry water with the following characteristics is to be treated:

| | |
|---|---|
| 1. pH | 7.04 |
| 2. Dry residue, mg/l | 2680 |
| 3. Hardness mg-eqv./l | 25.0 |
| 4. Sulphates, mg/l | 960 |
| 5. Chlorides, mg/l | 815 |
| 6. Iron, mg/l | 0.6 |
| 7. Copper, mg/l | 0.06 |
| 8. Zink, mg/l | 3.3 |
| 9. Manganese, mg/l | 0.9 |

After preliminary sedimentation, the original waste water was directed into the electroflotator with titanium electrodes, through which a direct current of 96 A/m² was run. The electric treatment took 5 minutes. The froth formed in the process of treatment was removed into a special vessel (Stage 1).

The water after exiting from this stage had the following characteristics

| | |
|---|---|
| 1. pH | 7.15 |
| 2. Dry residue, mg/l | 2760 |
| 3. Hardness mg-eqv./l | 24.3 |
| 4. Sulphates, mg/l | 975 |
| 5. Chlorides, mg/l | 820 |
| 6. Iron, mg/l | 0.20 |
| 7. Copper, mg/l | 0.04 |
| 8. Zinc, mg/l | 1.6 |
| 9. Manganese, mg/l | 0.4 |

The partly treated water was then directed into the electric flotocoagulator with soluble aluminium electrodes, density of the direct current on the electrodes was 178 A/m². This stage of the electric treatment took 10 minutes. Then the water entered the reactor/mixer, where a 5%-solution of milk of lime was added in the 1:10 proportion, and the solution was continually stirred for 30 minutes. In this stage, pH became: 12.0-12.4. After the treatment with lime, the water was mixed with the flocculant solution and moved into the sedimentation tank, where flakes formed, sedimentation and clarification of water took place (Stage 2). Results of the treatment are shown in Table 1, Example 1.

At the end of this stage of treatment, the water has the following properties:

| | |
|---|---|
| 1. pH | 12.3 |
| 2. Dry residue, mg/l | 1720 |
| 3. Hardness mg-eqv./I | 11.0 |
| 4. Sulphates, mg/l | 160 |
| 5. Chlorides, mg/l | 627 |
| 6. Iron, mg/l | 0.02 |
| 7. Copper, mg/l | 0.002 |
| 8. Zinc, mg/l | 0.005 |
| 9. Manganese, mg/l | 0.01 |

As can be seen from Example 1, the suggested method and installation worked well. The dry residue decreased from 2680 mg/l to 1720 mg/l, hardness from 25.0 mg-equiv/l to 11.00 mg-equiv/l, the quantity of sulphates, from 960 mg/l to 160 mg/l, iron, from 0.6 mg to 0.02 mg/l, copper from 0.06 mg/l to 0.02 mg/l, zinc from 3.3 mg/l to 0.005 mg/l, and manganese from 0.9 mg/l to 0.01 mg/l.

### Example 2

Treatment of an original concentrate left after mining waste water was treated with the reverse osmosis method and had the following characteristics:

| | |
|---|---|
| 1. pH | 6.44 |
| 2. Dry residue, mg/l | 7680 |
| 3. Hardness mg-eqv./I | 39.00 |
| 4. Sulphates, mg/l | 4296 |
| 5. Chlorides, mg/l | 607 |
| 6. Iron, mg/l | 5.96 |
| 7. Copper, mg/l | 0.006 |
| 8. Zinc, mg/l | 10.8 |
| 9. Manganese, mg/l | 16.3 |

The original concentrate, produced after mining waste water was treated with reverse osmosis, was directed to the electroflotator with titanium electrodes fed by direct current, 110 A/m². Electric treatment was carried out for 5 min. The froth was removed during the treatment (Stage 1). Waste water had the following properties after this stage of treatment:

| | |
|---|---|
| 1. pH | 6.15 |
| 2. Dry residue, mg/l | 7630 |
| 3. Hardness mg-eqv./I | 34.7 |
| 4. Sulphates, mg/l | 4398 |
| 5. Chlorides, mg/l | 620 |
| 6. Iron, mg/l | 0.47 |
| 7. Copper, mg/l | 0.004 |
| 8. Zinc, mg/l | 8.4 |
| 9. Manganese, mg/l | 7.6 |

The partly treated concentrate was then treated in the electroflotocoagulator with soluble aluminium electrodes, fed with direct current of 298 A/m². Electric treatment was carried on for 10 min. Then the concentrate was fed into the reactor/mixer, together with a 5% solution of lime milk in the 1:10 ratio, while continuous stirring was in place. The treatment was carried out for 30 min. At the end of the treatment pH reached 12.2. Then the concentrate treated with lime milk was mixed with a flocculant solution and fed into the sedimentation tank, where large flakes formed, the sediment precipitated and the concentrate was clarified in colour (Stage 2). Waste water had the following properties after Stage 2:

| | |
|---|---|
| 1. pH | 12.2 |
| 2. Dry residue, mg/l | 3640 |
| 3. Hardness mg-eqv./I | 31.0 |
| 4. Sulphates, mg/l | 1472 |
| 5. Chlorides, mg/l | 713 |
| 6. Iron, mg/l | 0.6 |
| 7. Copper, mg/l | 0.012 |
| 8. Zinc, mg/l | 0.61 |
| 9. Manganese, mg/l | 0.083 |

As can be seen from Fig. 2, the proposed method and installation are fit to treat concentrated waste water. The dry residue decreased from 7680 mg/l to 3640 mg/l, water hardness decreased from 39.0 mg-equiv/l to 31.0 mg-equiv/l, the quantity of sulphates decreased from 4296 mg/l to 1472 mg/l, that of iron, from 5.96 to 0.6 mg/l, copper, from 0.006 mg/l to 0.012 mg/l, zinc, from 10.8 to 0.061 mg/l, and manganese from 16.3 to 0.83 mg/l.

The results of treatment using the proposed method as in Example 2 are shown in Table 2.

### Example 3

The original concentrate produced after mining water was treated with a reverse osmosis method, has the following characteristics:

| | |
|---|---|
| 1. pH | 6.44 |
| 2. Dry residue, mg/l | 7680 |
| 3. Hardness mg-eqv./I | 39.00 |
| 4. Sulphates, mg/l | 4296 |
| 5. Chlorides, mg/l | 607 |
| 6. Iron, mg/l | 5.96 |
| 7. Copper, mg/l | 0.006 |
| 8. Zink, mg/l | 10.8 |
| 9. Manganese, mg/l | 16.3 |

The concentrate was fed into the electroflotator with titanium electrodes. Direct current on the anodes had density of 110 A/m². The electric treatment was carried on for 5 minutes. The froth formed in the process was removed (Stage 1). The waste water had the following characteristics after Stage 1:

| | |
|---|---|
| 1. pH | 6.15 |
| 2. Dry residue, mg/l | 7630 |
| 3. Hardness mg-eqv./I | 34.7 |
| 4. Sulphates, mg/l | 4398 |
| 5. Chlorides, mg/l | 620 |
| 6. Iron, mg/l | 0.47 |
| 7. Copper, mg/l | 0.004 |
| 8. Zinc, mg/l | 8.4 |
| 9. Manganese, mg/l | 7.6 |

The partly treated concentrate was then treated in the electric flotocoagulator with soluble aluminium electrodes, through which direct current of 298 A/m² was run. The electric treatment was carried on for 10 minutes. The concentrate was then fed into the reactor/mixer, into which a 5% solution of lime milk in a 1:10 ratio as well as powder of amorphous aluminium hydroxide were added under continuous stirring for 30 minutes. pH at the end of this stage of treatment was 11.27. Then the concentrate, treated with lime milk and aluminium hydroxide, was mixed with a flocculant solution and fed into the sedimentation tank, where flakes formed, precipitation took place and the colour of the concentrate became lighter (Stage 2).

The waste water had the following characteristics after this stage of treatment:

| | |
|---|---|
| 1. pH | 11.27 |
| 2. Dry residue, mg/l | 2430 |
| 3. Hardness mg-eqv./I | 13.0 |
| 4. Sulphates, mg/l | 143 |
| 5. Chlorides, mg/l | 663 |
| 6. Iron, mg/l | 0.03 |
| 7. Copper, mg/l | 0.002 |
| 8. Zinc, mg/l | 0.016 |
| 9. Manganese, mg/l | 0.04 |

As can be seen from Example 3, the proposed method and installation are suitable for treatment of concentrated waste waters; the dry residue decreased from 7680 mg/l to 2430 mg/l, the hardness of the water decreased from 39.0 mg-equiv/l to 13.0 mg-equiv /l, the quantity of sulphates from 4296 mg/l, to 143 mg/l, iron, from 5.96 to 0.03 mg/l. copper from 0.006 to 0.002 mg/l, zinc from 10.8 to 0.016, and manganese from 16.3 to 0.04 mg/l.

The results of the treatment in accordance with Example 3 are shown in Table 3.

The results presented in Tables 1-3 suggest that, during electroflotation (Stage 1 of the treatment), content of metals in waste water or in the concentrate decreased, while in the electroflotocoagulator and when lime milk was added and stirred (Stage 2) contents of metals and sulphates decreased. It is worth mentioning that when concentration of sulphates in the original concentrate was high (Example 2), treatment with lime cut down the content of sulphates by 66.5% and that when amorphous aluminium hydroxide was added (Example 3), the concentration of sulphates dropped by 96.7% at the end of Stage 2.

This shows that the present invention ensures continuous treatment of a wide range of industrial waste waters, including concentrates, cutting down the quantities of suspended materials, petroleum products, ions of heavy metals and sulphate-ions to the required levels, without adding any secondary contaminants to the treated water. After this treatment, industrial water can be used as technological fluid, household/drinking water or water for fisheries.

The installation for electrochemical treatment of industrial waste waters consists of units of simple and reliable design, which permits using it for optimum de-contamination of any volumes of industrial waste water of different industries.

### Method of Comprehensive Electrochemical Treatment of Industrial Waste Waters and an Installation for Implementing this Method

**Table 1.**

| **Results of Treatment of Quarry Water, Using the Comprehensive Electrochemical Method** | | | |
|---|---|---|---|
| Characteristic | Original quarry water | Original quarry water→ EF (Stage 1) | Orig. →EF→EFK_{A} + lime→stirring→ sedimentation (Stage 2) |
| 1. pH | 7.04 | 7.15 | 12.3 |
| 2. Dry residue, mg/l | 2680 | 2760 | 1720 |
| 3. Water hardness mg-eqv./l | 25.0 | 24.3 | 11.0 |
| 4. Sulphates, mg/l | 960 | 975 | 160 |
| 5. Chlorides, mg/l | 815 | 820 | 627 |
| 6. Iron, mg/l | 0.6 | 0.2 | 0.02 |
| 7. Copper, mg/l | 0.06 | 0.04 | 0.002 |
| 8. Zink, mg/l | 3.3 | 1.6 | 0.005 |
| 9. Manganese, mg/l | 0.9 | 0.4 | 0.01 |

### Method of Comprehensive Electrochemical Treatment of Industrial Waste Water and an Installation for Implementing this Method

**Table 2.**

| **Results of Treatment of the Concentrate Produced when Mining Waste Water Was Treated with a Reverse Osmosis Method, Using the Comprehensive Electrochemical Method** | | | |
|---|---|---|---|
| Characteristic | Original quarry water | Original quarry water→ EF (Stage 1) | Orig. →EF→EFK_{A} + lime→stirring-sedimentation (Stage 2) |
| 1. pH | 6.44 | 6.15 | 12.2 |
| 2. Dry residue, mg/l | 7680 | 7630 | 3640 |
| 3. Water hardness mg-eqv./I | 39.0 | 34.7 | 31.0 |
| 4. Sulphates, mg/l | 4296 | 4398 | 1472 |
| 5. Chlorides, mg/l | 607 | 620 | 713 |
| 6. Iron, mg/l | 5.96 | 0.47 | 0.06 |
| 7. Copper, mg/l | 0.003 | 0.004 | 0.012 |
| 8. Zinc, mg/l | 10.8 | 8.4 | 0.061 |
| 9. Manganese, mg/l | 16.3 | 7.6 | 0.083 |

### Method of Comprehensive Electrochemical Treatment of Industrial Waste Water and an Installation for Implementing this Method

**Table 3.**

| **Results of Treatment of the Concentrate Produced when Mining Water Was Treated with a Reverse Osmosis Method, Using the Comprehensive Electrochemical Method** | | | |
|---|---|---|---|
| Characteristic | Original quarry water | Original quarry water→ EF (Stage 1) | Orig. →EF→EFK_{A} + lime→stirring-sedimentation (Stage 2) |
| 1. pH | 6.44 | 6.15 | 11.27 |
| 2. Dry residue, mg/l | 7680 | 7630 | 2430 |
| 3. Water hardness mg-eqv./I | 39.0 | 34.7 | 13.0 |
| 4. Sulphates, mg/l | 4296 | 4398 | 143 |
| 5. Chlorides, mg/l | 607 | 620 | 663 |
| 6. Iron, mg/l | 5.96 | 0.47 | 0.03 |
| 7. Copper, mg/l | 0.003 | 0.004 | 0.002 |
| 8. Zinc, mg/l | 10.8 | 8.4 | 0.016 |
| 9. Manganese, mg/l | 16.3 | 7.6 | 0.04 |

## Claims

1. A method of comprehensive electrochemical treatment of industrial waste water, including averaging the waste water, removing large suspended materials, treating the water until it acquires the right pH, treating the waste water with electrolysis in an electric flotocoagulator with soluble aluminium electrodes, treating the water in an electroflotator with insoluble electrodes, removing the formed froth, holding the water in a sedimentation tank, and removing the precipitant, different in that waste water undergoes electroflotation prior to electrolysis in the electroflotocoagulator, after which the water is treated until it acquires no less than pH =12 thanks to introducing a neutralizer in the form of lime and continuous stirring, then introducing a flocculant into the water treated.

2. A method as described in 1, different in that amorphous aluminium hydroxide is fed into the reactor/mixer at the same time as the neutralizer in the form of lime is added.

3. A method as explained in 1 and 2, different in that amorphous aluminium hydroxide is added in the form of a thermal decomposition product of natural **gibbsite** with its amorphous structure.

4. An installation for comprehensive electrochemical treatment of industrial waters, consisting of an average, an electroflotator with insoluble electrodes, and an electroflotocoagulator with soluble aluminium electrodes, a device for removing froth, a neutraliser dispenser, a sedimentation tank, different in that the electric flotocoagulator is mounted after the electroflotator and is connected to a reactor/mixer, equipped with a neutraliser dispenser, while the reactor/mixer is connected -via a pipeline- with a sedimentation tank for waste water, which is connected to the unit for preparation and dispensing of the flocculant solution.

5. An installation as in 4, different in that it has an additional device in the form of a dispenser of amorphous aluminium hydroxide, capable of introducing same into the reactor/mixer.
